**Europäisches Patentamt**

**European Patent Office**

**Office européen des brevets**

(19)

(11) Veröffentlichungsnummer: **0 230 857**

**A1**

(12) ## EUROPÄISCHE PATENTANMELDUNG

(21) Anmeldenummer: **86810536.2**

(22) Anmeldetag: **25.11.86**

(51) Int. Cl.³: **G 01 G 13/14**
**B 65 B 1/32**

(30) Priorität: **20.01.86 CH 200/86**

(43) Veröffentlichungstag der Anmeldung:
**05.08.87 Patentblatt 87/32**

(84) Benannte Vertragsstaaten:
**DE FR GB IT**

(71) Anmelder: **SIG Schweizerische Industrie-Gesellschaft**

**CH-8212 Neuhausen am Rheinfall(CH)**

(72) Erfinder: **Reichelt, Wolfgang**
**Burkartstrasse 3**
**D-7702 Gottmadingen/Randegg 3(DE)**

(74) Vertreter: **White, William et al,**
**PATENTANWALTS-BUREAU ISLER AG Postfach 6940**
**Walchestrasse 23**
**CH-8023 Zürich(CH)**

(54) **Verfahren und Vorrichtung zum Wiegen leerer Verpackungsbeutel.**

(57) Die Beutel (3) werden in einer taktweise bewegten Förderkette (1) mit Bechern (2) zur Aufnahme der Beutel (3) einer
Abfüllstation (D) zugeführt. Vor der Abfüllstation (D) wird in
einer ersten Station (B) der leere Beutel (3) mittels eines
Druckluftstrahls aus einer Düse (40) über eine Führungsbahn
(17) auf einen Halter (11) einer Waage (10) transportiert. Nach
dem Wiegen befördert ein Strahl aus einer zweiten Düse (42)
den Beutel (3) längs einer zweiten Führungsbahn (20) in einen
Speicher (30). Von diesem wird der Beutel (3) mittels eines
Strahls aus einer dritten Düse (45) in einen leeren Becher (2)
einer nachfolgenden Station (C) transportiert.

Damit gelingt es, das Taragewicht auch weicher, wenig
standsicherer Beutel (3) zu bestimmen, wobei zum Wiegen
genügend Zeit zur Verfügung steht. Bei dem nach dem Bruttogewicht gesteuerten Abfüllen der Beutel (3) in der Abfüllstation (D) kann damit das erforderliche Nettogewicht genauer eingehalten werden.

./...

EP 0 230 857 A1

Fig.1

Verfahren und Vorrichtung zum Wiegen leerer Verpackungsbeutel

---

Ein Verfahren gemäss Oberbegriff des Anspruchs 1 ist aus der
CH-PS 383 866 bekannt. Mit der in dieser Schrift beschriebenen Wiegevorrichtung wird in der einen Station einer taktweise bewegten Transporteinrichtung mit Bechern zur Aufnahme
von Verpackungsbehältern der leere Behälter gewogen, also
das Taragewicht bestimmt. Beim anschliessenden Abfüllen des
Behälters kann dann das Nettoeinfüllgewicht genauer eingehalten werden. Dieses Verfahren eignet sich gut für steife
Verpackungsbehälter, ist jedoch ungeeignet zum Wiegen leerer
Verpackungsbeutel, weil diese zuwenig standsicher sind und
die Reibung in seitlichen Führungen bei Beuteln stärker
schwankt als bei steifen Behältern und deshalb das Wiegeergebnis zu stark beeinflusst würde.

Es ist aus der CH-PS 386 914 und aus der CH-PS 396 743 bei
Verpackungsanlagen mit taktweise bewegten Becherketten für
Verpackungsbeutel bekannt, die Becher bei einer Wiegestation
soweit seitlich zu öffnen, dass die Verpackungsbeutel frei.

auf der Waage stehen. Dies ist jedoch nur bei gefüllten Beuteln, also zur Bestimmung des Bruttogewichtes möglich, denn frei stehende, leere Beutel würden zu leicht durch Luftbewegungen verrückt, was zu Störungen führen würde.

Für die Bruttogewichtsbestimmung wurde in der DE-OS 31 42 366 vorgeschlagen, einzelne Packungen durch einen Stössel aus einer zugeführten Reihe herauszuschieben und nach dem Wiegen wieder in die Reihe hineinzuschieben. Während des Wiegens wird die Reihe durch Festklemmen der nächstfolgenden Packung aufgehalten. Auch diese Lösung ist nur für gefüllte Packungen oder steife Behälter anwendbar.

Der Erfindung liegt die Aufgabe zugrunde, das Leergewicht von Verpackungsbeuteln zu bestimmen. Diese Aufgabe wird durch die kennzeichnenden Merkmale der Ansprüche 1 und 6 gelöst.

Indem die zu wiegenden Beutel zum Wiegen aus dem betreffenden Becher ausgestossen und auf einen Halter der Waage transportiert werden, ist ein genaues Wiegen ohne Reibungseinflüsse durch seitliche Führungen der Beutel möglich. Es können auch relativ weiche, unstabile Beutel mit geringer Standsicherheit gewogen werden. Luftbewegungen haben auf das Wiegeergebnis kaum einen Einfluss und führen nicht zu Betriebsstörungen. Die Waage kann gut von Erschütterungen der Transportvorrichtung isoliert werden. Da der gewogene Beutel erst in einer nachfolgenden Station in einen leeren Becher zurückgeführt wird, steht für das Wiegen genügend Zeit zur Verfügung.

Das erfindungsgemässe Verfahren eignet sich vor allem bei der Beutelverpackung teurer Schüttgüter, insbesondere Kaffee, denn bei diesen Schüttgütern führt die genaue Kenntnis des Taragewichtes zu erheblichen Einsparungen, weil die Sicherheitsmarge über dem Soll-Nettogewicht geringer gehalten werden kann.

Nachfolgend wird ein Ausführungsbeispiel der Erfindung anhand der Zeichnung erläutert. Darin zeigt:

Fig. 1 schematisch eine Seitenansicht der an einer Abfüllmaschine montierten Wiegevorrichtung,

Fig. 2 bis Fig. 4 die Wiegevorrichtung in drei verschiedenen Phasen,

Fig. 5 eine Stirnansicht des Halters der Waage, und

Fig. 6 einen Schnitt durch die Führung.

Die Abfüllmaschine umfasst eine Kette 1 mit Bechern 2 zur Aufnahme von Verpackungsbeuteln 3. Die Kette 1 wird mittels eines Antriebsrades 4 taktweise gefördert. In einer ersten Station A wird in Pfeilrichtung E ein leerer Beutel 3 in den Becher 2 eingeführt. In einer Abfüllstation D wird mittels einer Abfüllvorrichtung 5 der Beutel 3 mit Schüttgut, z.B. Kaffee, gefüllt.

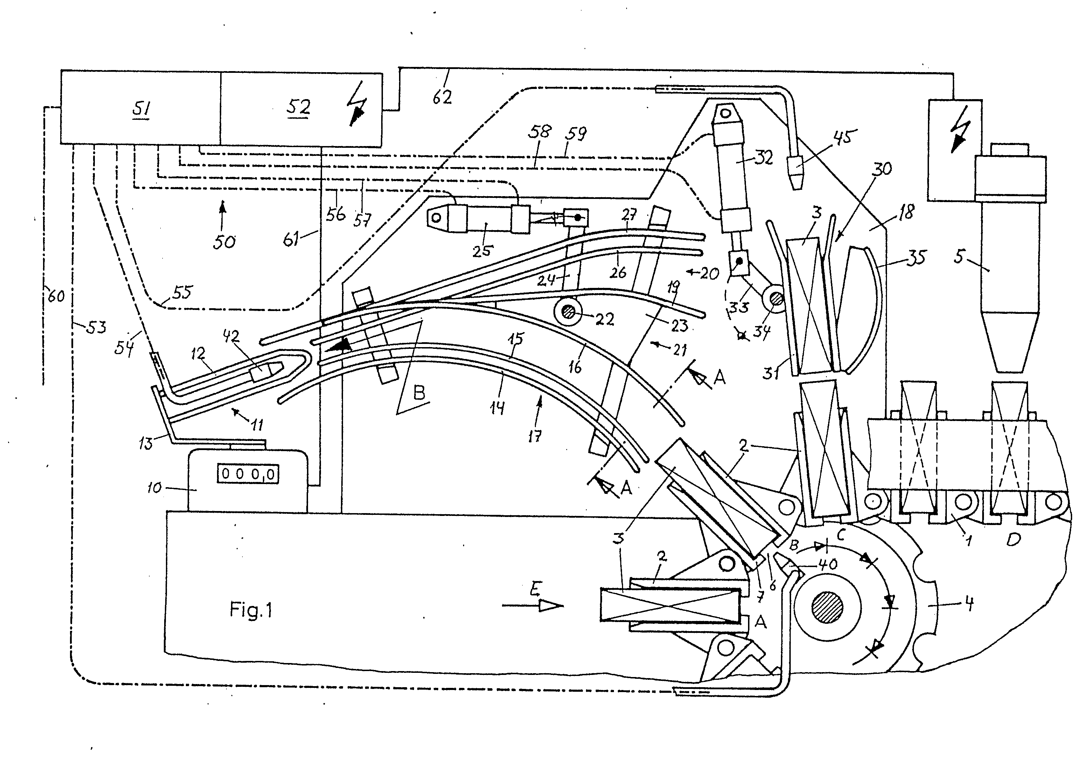

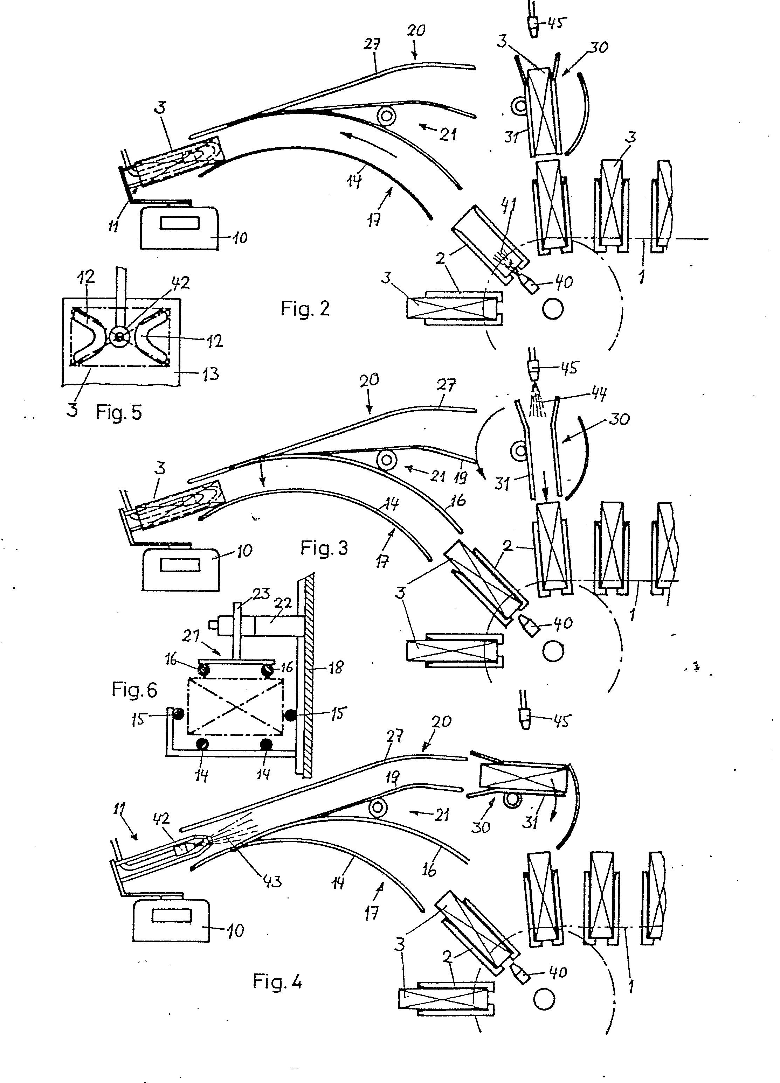

Zum Wiegen der leeren Beutel 3 ist zwischen der Station A und der Abfüllstation D eine Wiegevorrichtung angeordnet. Sie umfasst eine Waage 10 mit einem aus Metallstangen 12 geformten Halter 11, über welchen ein Beutel 3 gestülpt werden kann. Die Stangen 12 sind an einer Platte 13 der Waagschale befestigt. Zwischen einer Station B der Transportkette 1 und dem Halter 11 ist eine ebenfalls aus Metallstangen 14, 15, 16 bestehende Führung 17 für die Beutel 3 angeordnet. Dabei sind zwei untere Stangen 14 und zwei seitliche Stangen 15 an einem gehäusefesten Träger 18 befestigt (Fig. 6), während zwei obere Stangen 16 der Führung 17 gemeinsam mit zwei weiteren Stangen 19 einer zweiten Führung 20 eine Weiche 21 bilden. Die Stangen 16, 19 der Weiche 21 sind an einer um eine horizontale Achse 22 schwenkbaren Platte 23 befestigt. Die Weiche 21 kann über einen Schwenkhebel 24 mittels eines Pneumatikzylinders 25 aus der in Fig. 1 dargestellten Stellung in eine in Fig. 4 gezeigte zweite Endstellung geschwenkt werden, in welcher die Stangen 19 parallel zu vier weiteren, ortsfesten Stangen 26, 27 sind und mit diesen die zweite Führung 20 vom Halter 11 zu einem Speicher 30 bilden. Die Beutel werden in den Führungen 17, 20 längs ihrer Achse gefördert. Damit wird die Gefahr der Deformation der Beutel während des Transportes stark reduziert.

Der Speicher 30 hat einen beidseits axial offenen zylindrischen Behälter 31, der mittels eines weiteren Pneumatikzylinders 32 über einen Hebel 33 um eine horizontale Achse 34 von der in Fig. 1 dargestellten Stellung in jene gemäss Fig. 4 schwenkbar ist. In der Stellung gemäss Fig. 1 fluchtet der Behälter 31 mit einem Becher 2 in einer weiteren Station C der Förderkette 1. In der Stellung gemäss Fig. 4 hingegen fluchtet der Behälter 31 mit der Führung 20, so dass der Beutel 3 über die Führung 20 in den Behälter 31 bis an eine kreiszylinderförmige Anschlagplatte 35 geführt werden kann (Fig. 4). Die beiden Zylinder 25, 32 sind am Träger 18 angelenkt.

Zum Transport der Beutel 3 von der Station B zum Halter 11 (Fig. 2) ist in der Station B unter einer Ausnehmung 6 eines Auflageflansches 7 des Bechers 2 eine Düse 40 angeordnet. Ein Druckluftstrahl 41 aus dieser Düse 40 fördert den Beutel 3 von der Station B längs der Führung 17 zum Halter 11. Innerhalb der Stangen 12 des Halters 11 ist gehäusefest eine zweite Düse 42 angeordnet, deren Druckluftstrahl 43 den Beutel 3 bei umgeschalteter Weiche 21 längs der Führung 20 in den Speicher 30 fördert (Fig. 4). Nach dem Schwenken des Speichers 30 fördert ein Druckluftstrahl 44 aus einer dritten Düse 45 den Beutel 3 aus dem Behälter 31 in einen leeren Becher 2 in der Station C der Förderkette 1 (Fig. 3).

Die Wiegevorrichtung wird über eine Steuereinrichtung 50 mit einem Pneumatikteil 51 und einem Elektronikteil 52 gesteuert. Ueber ein nichtdargestelltes Impulssignal ist die Steuereinrichtung 50 mit dem Takt der Förderkette 1 synchronisiert. Der Pneumatikteil 51 enthält elektrisch betätigte Ventile, mittels welcher über Leitungen 53, 54, 55 die Düsen 40, 42 und 45 mit Druckluftimpulsen beaufschlagt werden. Ueber weitere Leitungen 56, 57, 58, 59 werden die Zylinder 25, 32 angesteuert. Eine Zuleitung 60 versorgt den Pneumatikteil 51 mit Druckluft.

Das Wiegeergebnis der Waage 10 wird über eine Signalleitung 61 an den Elektronikteil 52 übermittelt und dort gespeichert, bis der gewogene Beutel 2 in die Abfüllstation D gelangt. In dieser Station, die aus mehreren Einzelstationen der Förderkette 1 bestehen kann mit Zwischenwägungen des Bruttogewichtes entsprechend der CH-PS 383'866, wird der betreffende Beutel 2 bis zum vorgeschriebenen Nettogewicht gefüllt. Die Beutel 3 werden üblicherweise aus einer Folienbahn hergestellt, die von einer Vorratsrolle abgezogen wird. Das Gewicht der Beutel 3, die von derselben Vorratsrolle hergestellt werden, ändert dabei meist nur langsam und stetig, z.B. wenn die Folienstärke längs der Folienbahn etwas variiert. Für Beutel 3 aus derselben Vorratsrolle ist deshalb meist die gelegentliche stichprobenweise Bestimmung des Taragewichts hinreichend, so dass nicht jeder Beutel 3 gewogen werden muss. Das im Elektronikteil 52 gespeicherte Messresultat wird dann zum Abfüllen mehrerer nachfolgender Beutel 3 verwendet. Die Anordnung des Speichers 30 zwischen dem Halter 11 der Waage 10 und der Station C erlaubt unter diesen Umständen ein Wiegen über mehrere Schrittakte der Kette 1, obwohl die Stationen B und C unmittelbar benachbart sind. Dies verbessert die Wiegegenauigkeit. Für geringere Taktkadenzen oder grösseren Abstand der Stationen B und C ist es jedoch auch möglich, die Bahn 20 direkt über dem Becher 2 in der Station C münden zu lassen, also den Beutel 3 vom Halter 11 direkt in den leeren Becher 2 der Station C zu fördern.

P a t e n t a n s p r ü c h e

1.      Verfahren zum Wiegen von leeren Verpackungsbeuteln (3), wobei die Verpackungsbeutel (3) in einer
taktweise bewegten Transporteinrichtung (1,4) mit Bechern
(2) zur Aufnahme je eines Beutels (3) gefördert werden,
dadurch gekennzeichnet, dass in einer ersten Station (B) der
betreffende Beutel (3) aus dem Becher (2) ausgestossen und
auf einen Halter (11) auf einer Waage (10) transportiert
wird, dass der Beutel (3) gewogen wird, und dass der gewogene Beutel in einer zweiten Station (C) in einen leeren
Becher (2) der Transporteinrichtung (1,4) eingeführt wird.

2.      Verfahren nach Anspruch 1, dadurch gekennzeichnet, dass der Beutel (3) nach dem Wiegen zunächst in einen
Speicher (30) und von diesem in den freien Becher (2) in der
zweiten Station (C) gefördert wird.

3.      Verfahren nach Anspruch 1 oder 2, dadurch gekennzeichnet, dass der Beutel (3) auf seinem Weg von der ersten Station (B) zum Halter (11) und vom Halter (11), gegebenenfalls über den Speicher (30), zur zweiten Station (C) ausschliesslich in Richtung seiner Längsachse transportiert und durch Leitmittel (17,20) aussenseitig geführt wird.

4.      Verfahren nach einem der Ansprüche 1 bis 3, dadurch gekennzeichnet, dass der Beutel (3) auf seinem Weg von der ersten Station (B) zum Halter (11) und vom Halter (11), gegebenenfalls über den Speicher (30), zur zweiten Station (C) durch Druckluftstrahlen gefördert wird.

5.      Verfahren nach einem der Ansprüche 1 bis 4, dadurch gekennzeichnet, dass der Beutel (3) über den Halter (11) übergestülpt wird.

6.      Vorrichtung zur Durchführung des Verfahrens nach einem der Ansprüche 1 bis 5, gekennzeichnet durch eine erste Führungsbahn (17) zwischen der ersten Station (B) und dem Halter (11), eine zweite Führungsbahn (20) zwischen dem Halter (11) und der zweiten Station (C) bzw. dem Speicher (30), und durch Antriebsmittel (40,42,45) zum Transportieren des Beutels (3).

7.    Vorrichtung nach Anspruch 6, dadurch gekennzeichnet, dass zwischen den beiden Führungsbahnen (17,20) eine Weiche (21) angeordnet ist.

8.    Vorrichtung nach Anspruch 7, dadurch gekennzeichnet, dass die beiden Führungsbahnen (17,20) je mindestens ein ortsfestes Leitelement (14,15;26,27) und ein mit der Weiche (21) bewegliches Leitelement (16,19) aufweisen.

9.    Vorrichtung nach einem der Ansprüche 6 bis 8, dadurch gekennzeichnet, dass die Antriebsmittel Druckluftdüsen (40,42,45) sind.

10.    Vorrichtung nach einem der Ansprüche 6 bis 9 zur Durchführung des Verfahrens nach Anspruch 2, dadurch gekennzeichnet, dass der Speicher (30) ein axial beidseitig offenes Aufnahmeelement (31) für den Beutel (3) aufweist, das von einer ersten Stellung, in welcher es axial mit dem Ende der zweiten Führungsbahn (20) fluchtet, in eine zweite Stellung schwenkbar ist, in welcher es axial mit dem Becher (2) in der zweiten Station (C) fluchtet.

0230857

Fig.1

Fig. 2

Fig. 3

Fig. 5

Fig. 6

Fig. 4

0230857

Nummer der Anmeldung

EP 86 81 0536

Europäisches Patentamt

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl 4) |
|---|---|---|---|
| D,A | CH-A- 383 866 (HESSER)<br>* Seite 1, Zeilen 47-65; Figuren 1,2 *<br><br>--- | 1 | G 01 G 13/14<br>B 65 B 1/32 |
| A | US-A-3 073 398 (BLODGETT)<br>* Spalte 3, Zeilen 12-30; Figur 1 *<br><br>----- | 1 | |

RECHERCHIERTE SACHGEBIETE (Int. Cl.4)

B 65 B
G 01 G

Der vorliegende Recherchenbericht wurde für alle Patentansprüche erstellt.

| Recherchenort | Abschlußdatum der Recherche | Prüfer |
|---|---|---|
| DEN HAAG | 14-04-1987 | CLAEYS H.C.M. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82